# EUROPEAN PATENT APPLICATION

(11) **EP 1 985 509 A2**
(43) Date of publication of application: **29.10.2008**
(21) Application number: 08006360.5
(22) Date of filing: 31.03.2008
(51) Int. Cl.: B60R 22/18

(54) **Strap support apparatus**

(30) Priority: 23.04.2007 US 913442 P
(71) Applicant: Phil and Teds Most Excellent Buggy Company Limited, Wellington (NZ)
(72) Inventor: Gower, Campbell, Kelburn Wellington (NZ); Brace, Philip, Newton Wellington (NZ)
(74) Representative: Brown, David Leslie

(57) **Abstract**

A strap support apparatus has a body 121 having an elongate slot 131, and a strap support 141. The strap support 141 has a receiving portion 143 for receipt of a strap, a portion 145 that extends through the elongate slot of the body and defines an axis, and a portion 147 that is positioned on an opposite side of the slot from the receiving portion. Part of the strap support defines an engagement portion for selectively engaging part of the body to inhibit movement of the strap support along the slot. The strap support has a sliding configuration and an engaged configuration. The strap support 141 is adjustable between the sliding configuration and the engaged configuration by rotating the strap support about the axis relative to the body.

## Description

### FIELD OF THE INVENTION

The invention relates to a support for a strap. In particular, the invention relates to a support that provides adjustable support for a strap of a harness.

### BACKGROUND

Harnesses are used for supporting seated occupants in various types of seats. For example, over the shoulder seat belts are used to support occupants in vehicle seats such as car seats and the like.

Conventionally, babies and toddlers have been transported in a buggy. Buggies have harnesses that typically comprise two over-the-shoulder straps and a crotch strap that extends up between the legs and couples (directly or indirectly) with the over-the-shoulder straps. Once the harness is coupled, the baby or toddler is maintained in position by the harness.

Some buggies have harnesses with height adjustable shoulder straps to accommodate a growing child, and which enable the buggy to be used with children of different sizes. Generally, height adjustment of those shoulder straps is a complex task; requiring part of the shoulder strap to be unfed from a support for the height to be adjusted. That adjustment may require the removal of part of the strap.

It is an object of at least preferred embodiments of the present invention to provide an apparatus that provides easy adjustment of a strap, and/or to at least provide the public with a useful alternative.

### SUMMARY OF THE INVENTION

It is intended that reference to a range of numbers disclosed herein (for example, 1 to 10) also incorporates reference to all rational numbers within that range (for example, 1, 1.1, 2, 3, 3.9, 4, 5, 6, 6.5, 7, 8, 9 and 10) and also any range of rational numbers within that range (for example, 2 to 8, 1.5 to 5.5 and 3.1 to 4.7) and, therefore, all sub-ranges of all ranges expressly disclosed herein are hereby expressly disclosed. These are only examples of what is specifically intended and all possible combinations of numerical values between the lowest value and the highest value enumerated are to be considered to be expressly stated in this application in a similar manner.

The term "comprising" as used in this specification and claims means "consisting at least in part of". When interpreting each statement in this specification that includes the term "comprising", features other than that or those prefaced by the term may also be present. Related terms such as "comprise" and "comprises" are to be interpreted in the same manner.

In accordance with a first aspect of the present invention, there is provided a strap support apparatus for adjustable support of a strap, comprising:
a body having an elongate slot; and
a strap support, the strap support having a receiving portion for receipt of a strap, a portion that extends through the elongate slot of the body and that defines an axis, and a portion that is positioned on an opposite side of the slot from the receiving portion, part of the strap support defining an engagement portion for selectively engaging part of the body to inhibit movement of the strap support along the slot;
the apparatus configured such that the strap support has a sliding configuration in which it can be moved along the slot and an engaged configuration in which sliding movement of the strap support along the slot is inhibited, wherein the strap support is adjustable between the sliding configuration and the engaged configuration by rotating the strap support about the axis relative to the body.

Preferably, the body is provided with at least one engagement position, and the strap support is adjustable into the engaged configuration at the engagement position. Preferably, the body is provided with a plurality of discrete engagement positions, and the strap support is adjustable into the engaged configuration at any one of the discrete engagement positions. The strap support apparatus is suitably configured such that the strap support must be generally aligned with an engagement position prior to rotating the strap support to adjust the strap support into the engaged configuration. The body may be provided with two discrete engagement positions. Alternatively, the body may be provided with three or more discrete engagement positions, such as four, five, or six engagement positions for example.

Preferably, the engagement portion has a shorter dimension and a longer dimension, and the apparatus is configured such that the engaged configuration of the strap support corresponds to the longer dimension extending across the slot while the sliding configuration of the strap support corresponds to the shorter dimension extending across the slot.

The body may comprise a channel behind the slot, and the engagement portion of the strap support is defined by said portion that is positioned on an opposite side of the slot and is at least partly received in the channel, wherein the channel defines the engagement position(s). In particular, the channel may define one or more enlarged regions, each of which defines an engagement position for the strap support.

Preferably, said engagement portion that is defined by said portion that is positioned on an opposite side of the slot comprises an enlargement having a shorter dimension and a longer dimension, and the apparatus is configured such that the engaged configuration of the strap support corresponds to the longer dimension extending across the channel while the sliding configuration of the strap support corresponds to the shorter dimension extending across the channel. The longer dimension will suitably be configured to fit within the enlargement(s) of the channel, but will be longer than the transverse width of the remainder of the channel other than the enlargement(s).

The receiving portion, portion that extends through the slot, and portion that is positioned on an opposite side of the slot may suitably form a general "I" shape.

Rather than using a channel, discrete projections or detents could be provided to define the engagement positions of the strap support.

Alternatively, or in addition, the elongate slot may define one or more enlarged regions, each of which defines an engagement position for the strap support, and the engagement portion of the strap support may be defined by the portion that extends through the elongate slot, wherein the longer dimension of said engagement portion that is defined by the portion that extends through the elongate slot is configured to fit within the enlarged region(s) of the slot, but is longer than the transverse width of the remainder of the slot other than the enlarged region(s).

Alternatively, or in addition, the body may comprise a plurality of recesses provided in a front face of the body corresponding to the receiving portion of the strap support, the engagement portion may be defined by the receiving portion of the strap support, and said engagement portion that is defined by the receiving portion of the strap support may be selectively engageable with the recesses to define the engagement position(s). Preferably, the recesses are provided in pairs, with the recesses in each pair being positioned on respective sides of the slot, and said engagement portion that is defined by the receiving portion of the strap support comprises two projections, each of which is configured to engage with a respective recess of each pair of recesses, with the projections being positioned on respective sides of the portion that extends through the slot.

Said engagement portion that is defined by the receiving portion of the strap support is preferably frictionally engageable with the recesses.

The receiving portion of the strap support may comprise a loop for receiving the strap. The receiving portion could be in any other suitable form, such as a hook or a partial loop for example. A loop is preferred, as it will help prevent the strap from inadvertently disengaging from the receiving portion.

Preferably, the strap support is adjustable between the sliding configuration and the engaged configuration by rotating the strap support about the axis relative to the body, wherein the required amount of rotation is between about 30 degrees and about 90 degrees. More preferably, the required amount of rotation is between about 45 degrees and about 90 degrees. Most preferably, the required amount of rotation is about 90 degrees.

The body may be an integral part of a support surface, such as a back portion or seat portion of a seat, or a side support portion or wall or other part of a seat for example. Alternatively, the body may be adapted to mount to a support surface such as those mentioned in the preceding sentence for example. In that configuration, the body may comprise a forward flange and a rearward flange, with the forward flange adapted to be positioned in front of the support surface and the rearward flange adapted to be positioned behind the support surface. The two flanges may be spaced apart by a wall portion of the body. The forward and rearward flanges may provide a means for capturing part of the support surface, to mount the body to the support surface. For example, in the case of a seat formed as a cushion or with a membrane of some type, the cushion or membrane may be provided with an aperture sized smaller than the size of the forward and rearward flanges, and may be mounted to the cushion or membrane by positioning the wall portion of the body in the aperture of the membrane or cushion with one flange on one side of the membrane or cushion and the other flange on the other side of the membrane or cushion.

A part of the body having the forward flange may be formed separately from a part of the body having the rearward flange. Preferably, the part of the body having the rearward flange also defines the elongate slot.

In accordance with a second aspect of the present invention, there is provided a seat for supporting a baby, infant, or child, comprising:
a support surface for supporting the baby, infant, or child;
and a harness for supporting the baby, infant, or child when on the support surface, the harness having at least one strap supported by a strap support apparatus as outlined in relation to the first aspect above.

The body may be formed as an integral part of the seat, or could be a separate component. The strap support apparatus may have any one or more features outlined in relation to the first aspect above.

The strap may be a shoulder strap. The slot may be oriented generally vertically to provide selective height adjustment of the point of support of the shoulder strap. Alternatively, the slot may be oriented generally horizontally to provide transverse adjustment of the point of support of the shoulder strap. In that configuration, a longer dimension of the receiving portion may be transverse to the longer dimension of the engagement portion, such that when the engagement portion is engaged, the longer dimension of the receiving portion is generally horizontal. In another alternative, the slot may be oriented at an intermediate angle to provide both horizontal and vertical movement of the point of support of the shoulder strap. For example, the slot may be oriented such that the point of support for the shoulder strap moves outward as it moves upward. The engagement portion may be oriented at an intermediate angle relative to the receiving portion.

The harness may be provided with more than one shoulder strap, and each shoulder strap may be provided with a preferred form strap support apparatus. As an alternative, the harness may be provided with only a single shoulder strap, possibly with or without a waist strap or crotch strap.

Alternatively, or in addition, the harness may have a crotch strap that extends between the legs of the baby, infant, or child, and the crotch strap may be supported by a strap support apparatus as outlined in relation to the first aspect above. In that configuration, the slot would run in a generally forward-rearward direction of the seat portion, to provide selective depth adjustment of the crotch strap.

Alternatively, or in addition, the harness may have side straps that extend around the sides of the baby, infant, or child, and each side strap may be supported by a strap support apparatus outlined in relation to the first aspect above. The strap supports may be provided on any of the possible orientations described in relation to the shoulder strap supports.

As another alternative, the harness may have only a waist strap, and the strap support apparatus may provide vertical and/or horizontal adjustment of the waist strap.

The seat may be any suitable type of seat that requires a harness for a baby, child, or infant, such as a buggy. Alternatively, the seat may be any other type of seat that requires a harness for a baby, child, or infant, for example: a car seat for a baby, infant or child; a backpack for carrying a baby, infant, or child; wheelchair; shopping cart; booster seat; safety bassinet; highchair; or bouncer. Preferably, therefore, the seat is one selected from the group consisting of: a buggy; a car seat for a baby, infant, or child; a backpack for carrying a baby, infant, or child; wheelchair; shopping cart; a booster seat; a safety bassinet; a highchair; or a bouncer.

This invention may also be said broadly to consist in the parts, elements and features referred to or indicated in the specification of the application, individually or collectively, and any or all combinations of any two or more said parts, elements or features, and where specific integers are mentioned herein which have known equivalents in the art to which this invention relates, such known equivalents are deemed to be incorporated herein as if individually set forth.

The invention consists in the foregoing and also envisages constructions of which the following gives examples only.

### BRIEF DESCRIPTION OF THE DRAWINGS

Preferred forms of the present invention will now be described by way of example only and with reference to the accompanying drawings in which:
Figure 1 shows a strap support apparatus in accordance with a preferred form of the present invention incorporated into a buggy;
Figures 2a-2d show the preferred form strap support apparatus with the receiving portion being moved from a first engaged position (Figure 2a) to a second engaged position (Figure 2d);
Figure 3a is a rear view of the preferred form strap support apparatus showing the engagement portion engaged in an enlarged section of the body, and additionally showing the engagement portion being slid along the channel;
Figure 3b is a rear perspective view similar to Figure 3a;
Figure 4 is a side elevation view of the preferred form strap support apparatus showing the strap support in an engaged configuration, and additionally showing the strap support in a sliding configuration; and
Figure 5 is an end elevation view of the preferred form strap support apparatus showing the strap support in an engaged configuration, and additionally showing the strap support in a sliding configuration;
Figures 6a-6d show a second preferred form strap support apparatus with the receiving portion being moved from a first engaged position (Figure 6a) to a second engaged position (Figure 6d);
Figure 7a is a rear perspective view of the second preferred form strap support apparatus when the strap support is in the first engaged position;
Figure 7b is a rear perspective view of the second preferred form strap support apparatus when the strap support is in the second engaged position;
Figure 8a is a side perspective view of the second preferred form strap support apparatus when the strap support is in the second engaged position;
Figure 8b is a rear perspective view of the part of the body with the integral rear flange portion and slot;
Figure 8c is a front perspective view of the part of the body shown in Figure 8b;
Figure 8d is a rear perspective view of the part of the body with the front flange portion; and
Figure 9 is a rear perspective view of the strap support of the second preferred form strap support apparatus.

### DETAILED DESCRIPTION

Unless otherwise specified, it should be appreciated that references to directions in the following description such as forward, rearward, up, and down are for reference only, and should not be considered limiting.

While the preferred form buggy to which the present invention is applied is an "all terrain" type of buggy that is suitable for some off road use, it will be appreciated that the invention can be applied to any suitable type of pushing vehicle for transporting children. Therefore, the term "buggy" as used in this specification and claims should be interpreted to cover other alternative pushing vehicles, such as strollers, push chairs, and the like.

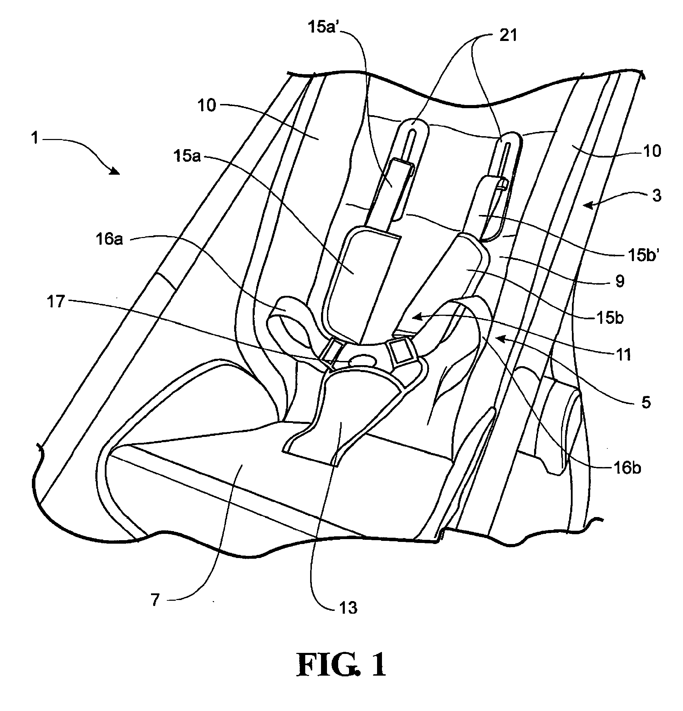

Figure 1 shows a buggy 1 for transporting a baby, infant, or child, that can be used with the present invention. The buggy 1 has a frame 3 operatively supported above the ground by wheels (not shown), and a seat 5. The seat 5 has a seat portion 7, a back portion 9, and side wall portions 10 that can provide lateral support to a seated occupant.

The buggy may be of the type described in our US provisional application number 60/923,318 and our PCT application number PCT/NZ2007/000264 and entitled "a Buggy". The contents of those documents are incorporated herein in their entirety by way of reference. Alternatively, the buggy could be any other suitable type of buggy.

The seated occupant is supported by a harness 11. The harness has a generally flexible crotch strap 13 adapted to extend upward from the seat portion 7 and between the legs of the occupant. The harness also has a pair of generally flexible shoulder straps 15a, 15b, each of which is adapted to extend forward and downward from the back portion 9. The shoulder straps are supported by preferred form strap support apparatuses 21 that will be described in further detail below. In the form shown, the strap support apparatuses are mounted to a cushion of the buggy seat. Alternatively, the strap support apparatuses could be mounted to a fabric or rigid backing of the buggy seat, and optionally behind a cushion. In such a configuration, the cushion could have one or more slots through which the straps of the harness can extend.

A loop 15a', 15b' of each strap is received in part of a respective strap support apparatus to support the shoulder straps from the back portion 9. The harness also has a pair of side straps 16a, 16b, each of which is adapted to extend forward and inward from the back portion 9 to extend around the sides of the occupant.

The shoulder straps 15a, 15b and side straps 16a, 16b are coupled (either directly or indirectly) with the crotch strap 13, in this form by a selectively releasable coupling 17. Any of the straps may have adjustment mechanisms to provide length adjustment of the strap. When a baby, infant, or child is sitting in the seat, they are supported and held in position by the coupled harness.

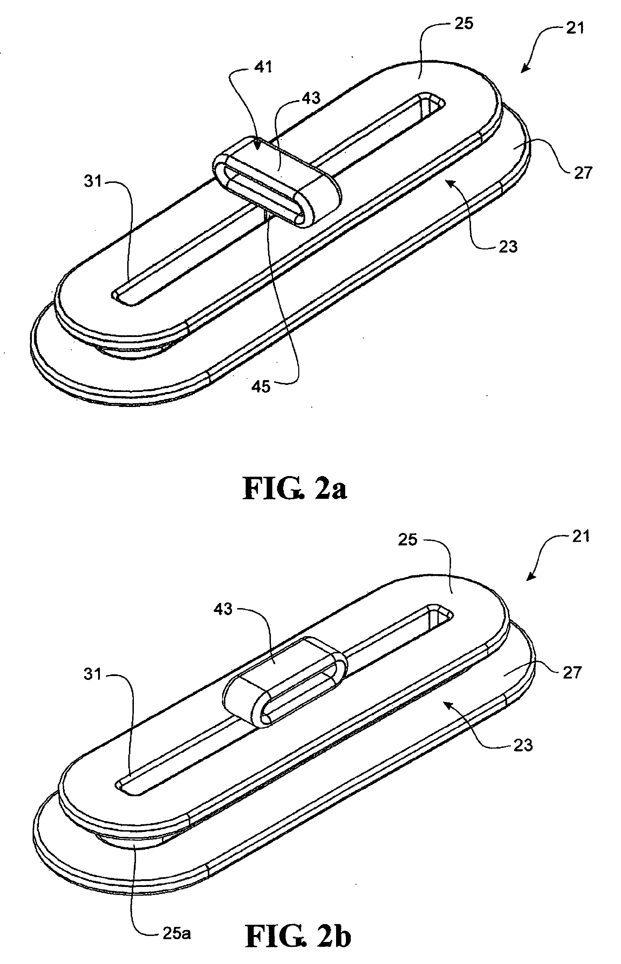

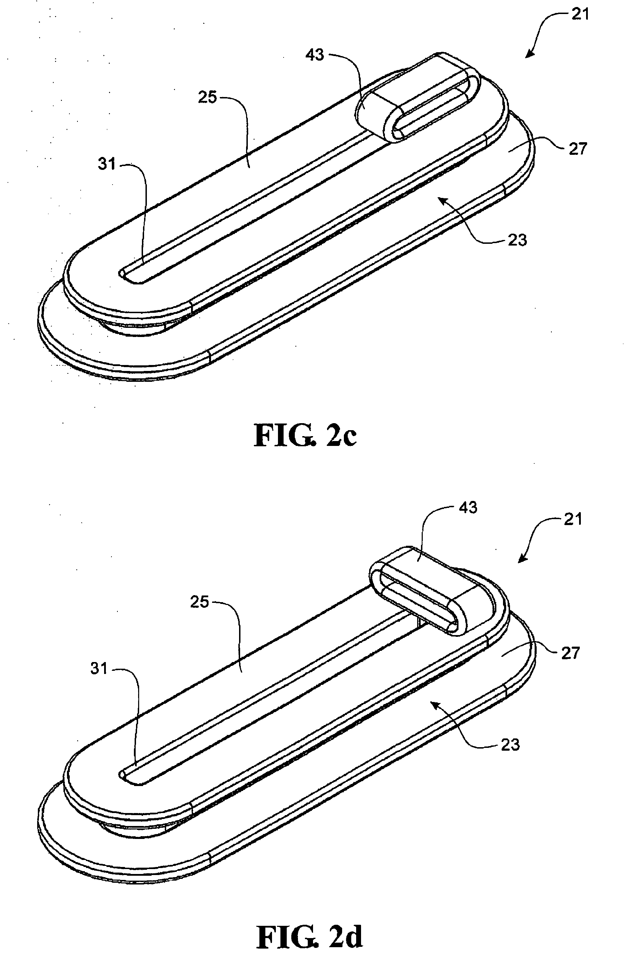

Referring now to Figures 2a to 5, the preferred form strap support apparatus 21 provides adjustable support of a strap. The apparatus 21 comprises a body 23. The body has a forward flange 25 and a rearward flange 27, with the two flanges 25, 27 spaced apart by a wall portion 29 of the body. The body defines an elongate slot 31 that extends a major part of the length of the body.

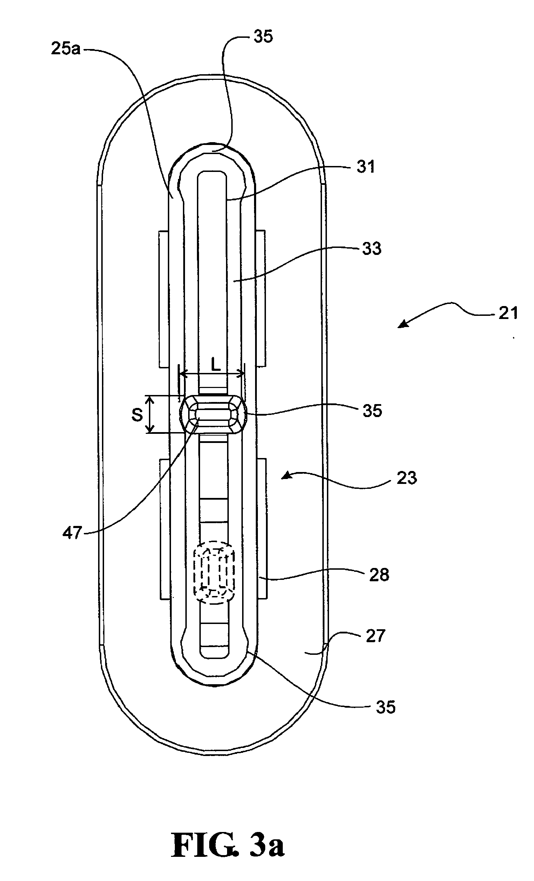

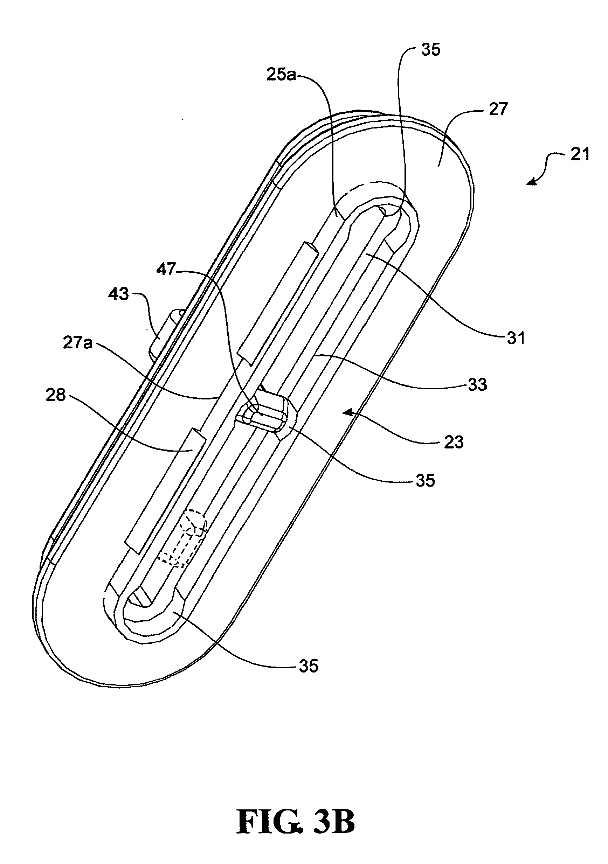

Referring to Figures 3a and 3b, the body has a channel 33 behind the slot. The channel defines one or more enlarged regions 35. In the form shown, the body is provided with three enlarged regions. Alternatively, the body may be provided with two or more enlarged regions, such as four, five, or six enlarged regions for example. The purpose of the enlarged regions will be described below.

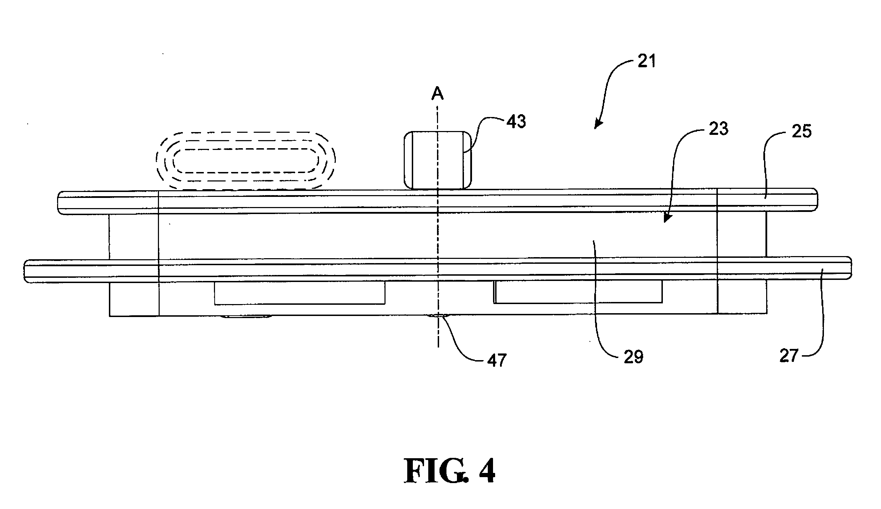

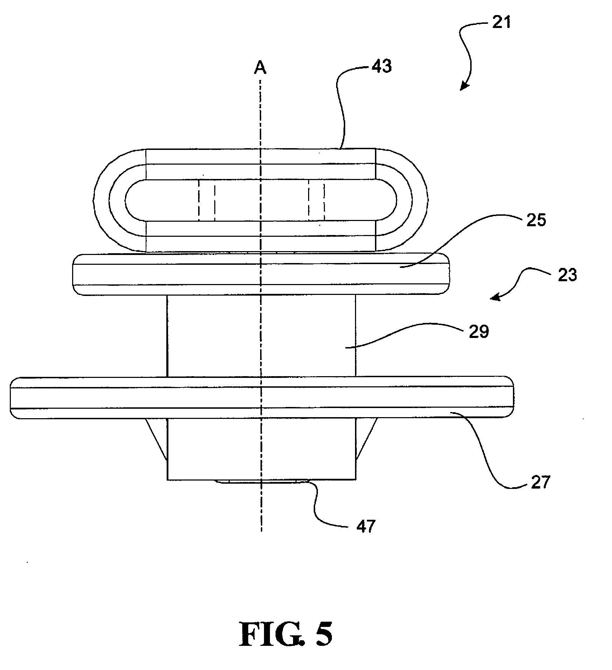

The apparatus additionally has a strap support 41. The strap support has a receiving portion 43 for receipt of a strap and that is adjacent to the forward flange 25 of the body. In the form shown, the receiving portion 43 of the strap support comprises a loop for receiving a loop 15a', 15b' of a respective strap 15a, 15b. A shank portion 45 of the strap support extends rearwardly through the elongate slot 31 of the body and defines an axis A (Figures 4 and 5). A portion 47 of the strap support is positioned on an opposite (rear) side of the slot from the receiving portion 43. That portion 47 is sized to be larger than the width of the slot 31 of the body, so the strap support cannot be removed from the body by pulling it forward relative to the body. The strap support has an engagement portion for selectively engaging part of the body to inhibit movement of the strap support 41 along the slot 31. The engagement portion is part of the portion 47. The engagement portion 47 of the strap support is at least partly received in the channel 33, as can be seen from Figures 3a and 3b. The receiving portion 43, the portion that extends through the slot 45, and engagement portion 47 of the strap support form a general "I" shape.

The apparatus is configured such that the strap support 41 has a sliding configuration in which it can be moved along the slot 31 and an engaged configuration in which sliding movement of the strap support along the slot 31 is inhibited. The strap support 41 is adjustable between the sliding configuration and the engaged configuration by rotating the strap support 41 relative to the body 21 about the axis A.

The body is provided with at least one engagement position for the strap support 31, and the strap support is adjustable into the engaged configuration at that engagement position. Preferably, the body has a plurality of discrete engagement positions, and the strap support is adjustable into the engaged configuration at any one of the discrete engagement positions. In the form shown, the discrete engagement positions are defined by the enlarged regions 35 of the channel 33.

Referring to Figure 3a, the engagement portion 47 comprises an enlargement having a shorter dimension S and a longer dimension L. The apparatus is configured such that the engaged configuration of the strap support corresponds to the longer dimension L extending across the channel 31, and the sliding configuration corresponds to the shorter dimension S extending across the channel and the longer dimension being generally aligned with the slot. The longer dimension L is configured to fit within the enlargements 35 of the channel, but is longer than the transverse width of the remainder of the channel other than the enlargements. Accordingly, when the longer dimension L extends across the channel and is received in an enlargement 35, the strap support cannot be moved along the slot 31.

The discrete engagement positions 35 are configured such that the strap support 41 must be generally aligned with an engagement position prior to rotating the strap support to lock the strap support in position relative to the body. In the form shown, the configuration of the body is such that when the longer dimension L of the engagement portion is generally aligned with the longitudinal direction of the slot 31, the strap support can be slid along the slot. When the longer dimension L of the engagement portion is at a generally perpendicular orientation, it will be engaged with an enlargement 35 and movement of the strap support along the slot will be inhibited. Only a partial turn, and in this embodiment a quarter turn, is required to adjust the strap support between the engaged configuration and the sliding configuration.

The channel, engagement portion, and enlargements could be configured and oriented such that a different amount of rotation adjusts the strap support between the engaged configuration and the sliding configuration. For example, in one configuration a rotation about the axis of as little as about 30 degrees (about one twelfth of a turn) can adjust the strap support between the engaged and sliding configuration. Preferably, a rotation of the strap support about its axis of between about one twelfth of a turn (about 30 degrees) and about one quarter of a turn (about 90 degrees) can adjust the strap support between the engaged and sliding configuration, more preferably a rotation of between about one eighth of a turn (45 degrees) and about one quarter of a turn, and most preferably a rotation of about one quarter of a turn. The desired angle can be obtained by orienting the enlargement(s) at a desired angle relative to the slot.

In one form, the engagement portion 47 will be a relatively tight fit in the enlargement, which will help minimise the likelihood of the strap support being inadvertently moved from an engaged position. Alternatively, the engagement portion may be a relatively loose fit, and loading applied to the strap by a person that is being supported will assist with maintaining the strap support in the desired enlargement 35.

The body 23 may be formed as an integral part of a support surface, such as a back portion or seat portion of a seat, or a side support portion or wall or other part of a seat for example. Alternatively, the body may be adapted to mount to a support surface such as those mentioned in the preceding sentence for example. In the form shown in Figure 1, the back portion 9 of the seat comprises a cushion. The cushion has an aperture for receiving each body portion 23. Each aperture is sized smaller than the size of the forward 25 and rearward 27 flanges, and is mounted to the cushion by positioning the wall portion 29 of the body in the aperture of the cushion with one flange 25 on one side of the cushion and the other flange 27 on the other side of the cushion. The forward 25 and rearward 27 flanges thereby provide a means for capturing part of the cushion, to mount the body to the cushion. A similar mounting arrangement could be used to mount the body to any other support surface, such as a membrane of some type or a panel for example. If necessary, adhesive, stitching, or other fastening could be used to secure the body to the support surface.

The body may be a two part device. In the form shown, the part of the body having the front flange 25 also defines the elongate slot 31. That is, the front flange is an integral part of the body with the slot. That part of the body has a boss 25a extending rearwardly from the front flange 25. The part of the body having the rear flange 27 is formed separately, but has a recess 27a that receives the boss 25a. That part of the body is engaged with the boss 25a and held in engagement by tapered locking members 28 formed on the boss. The tapered locking members provide a one-way engagement of the rear flange 27 with the boss 25a, so that those components cannot be easily separated.

With this configuration, the strap support 41 engages the part of the body that is positioned in front of the support surface, and the rear flange that is positioned behind the support surface engages that part of the body.

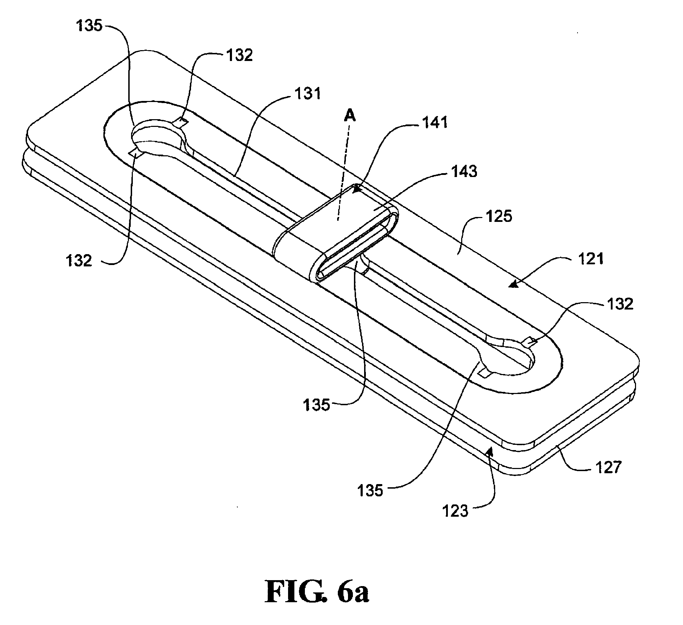

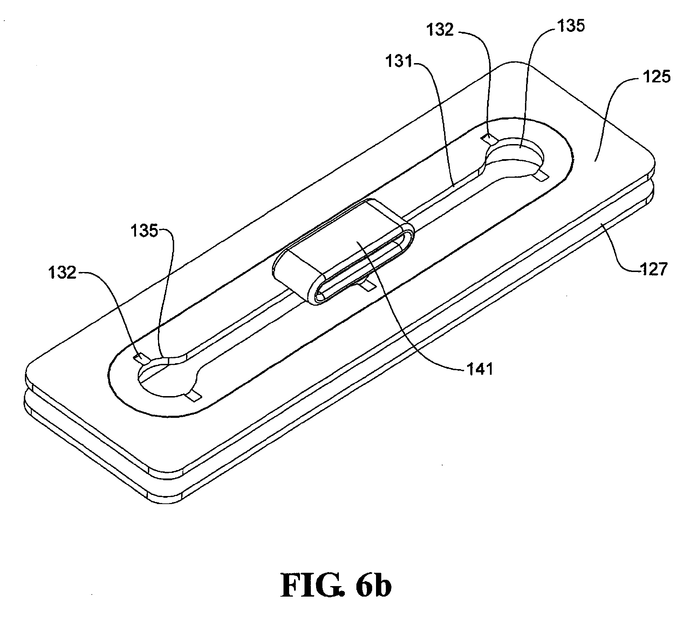

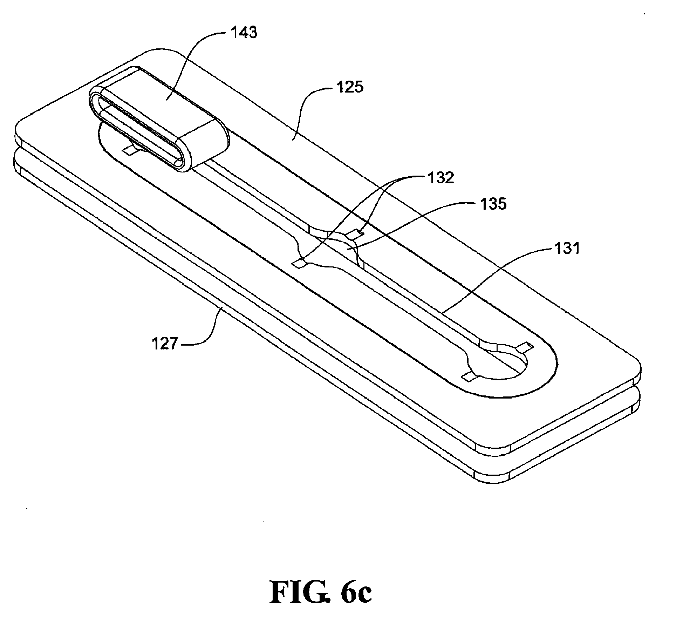

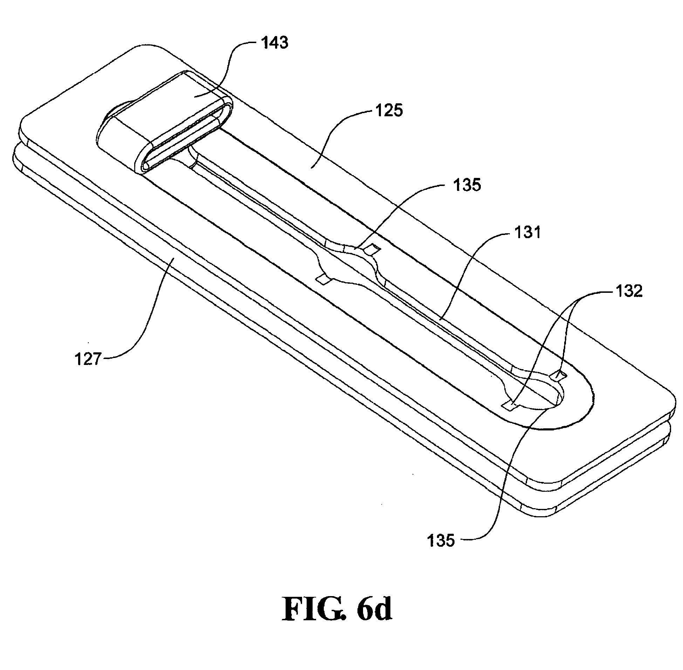

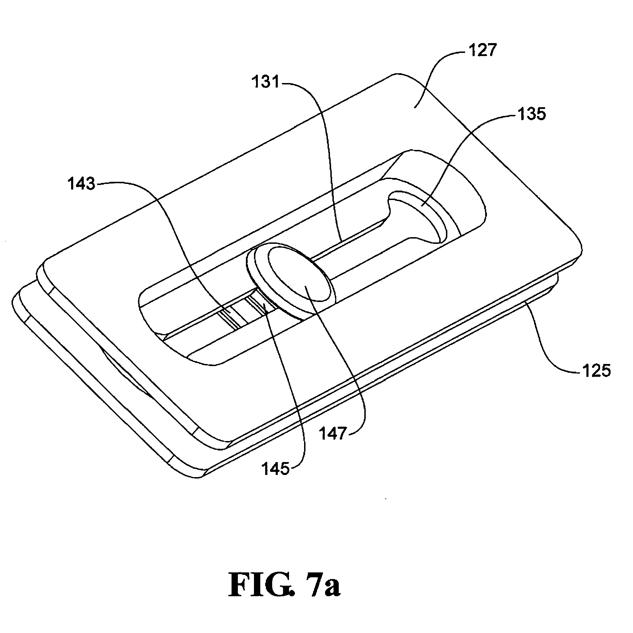

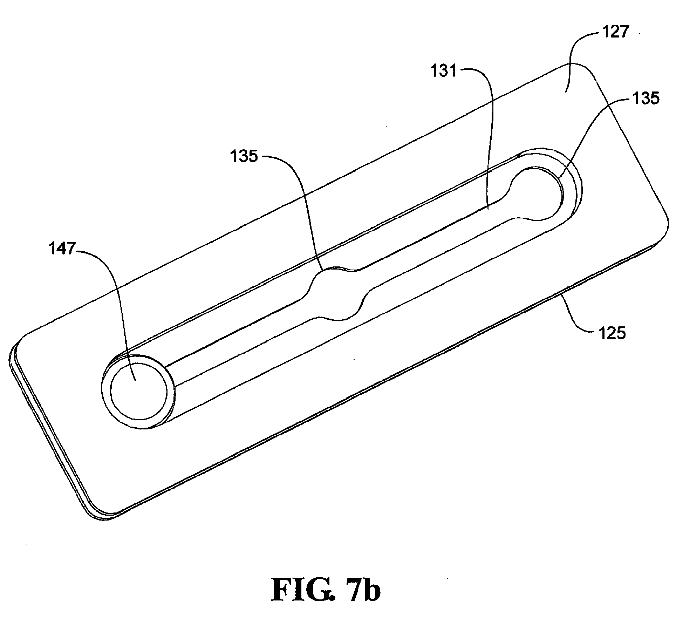

Figures 6a-9 show a second preferred embodiment of the present invention. The features and functioning should generally be considered the same as for the embodiment above, and like reference numerals indicate like parts with the addition of 100.

Again, the strap support 141 has a receiving portion 143 for receipt of a strap, a portion 145 that extends through the elongate slot 131 of the body and that defines an axis, and a portion 147 that is positioned on an opposite side of the slot 131 from the receiving portion 143. That portion 147 is sized to be larger than the width of the slot 131 of the body, so the strap support cannot be removed from the body by pulling it forward relative to the body.

Again, the strap support has an engagement portion for selectively engaging part of the body to inhibit movement of the strap support along the slot. The strap support 141 has a sliding configuration in which it can be moved along the slot 131 and an engaged configuration in which sliding movement of the strap support along the slot is inhibited. The strap support 141 is adjustable between the sliding configuration and the engaged configuration by rotating the strap support about the axis A relative to the body.

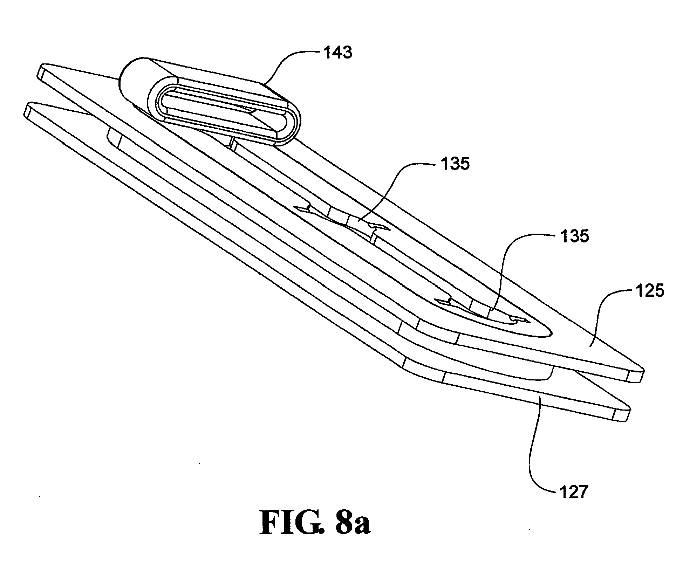

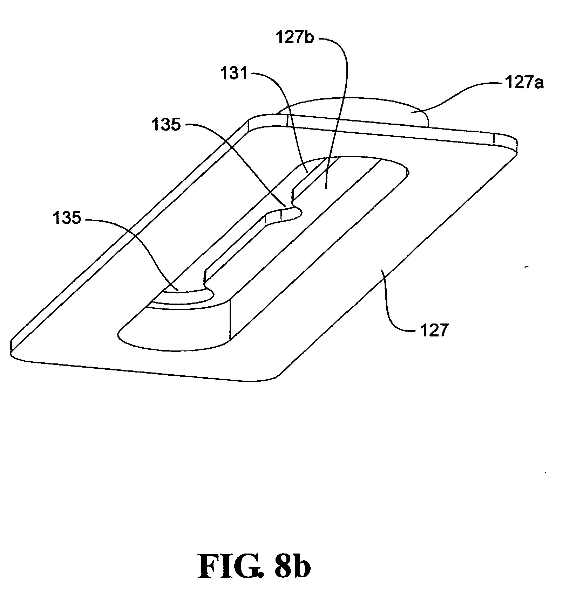

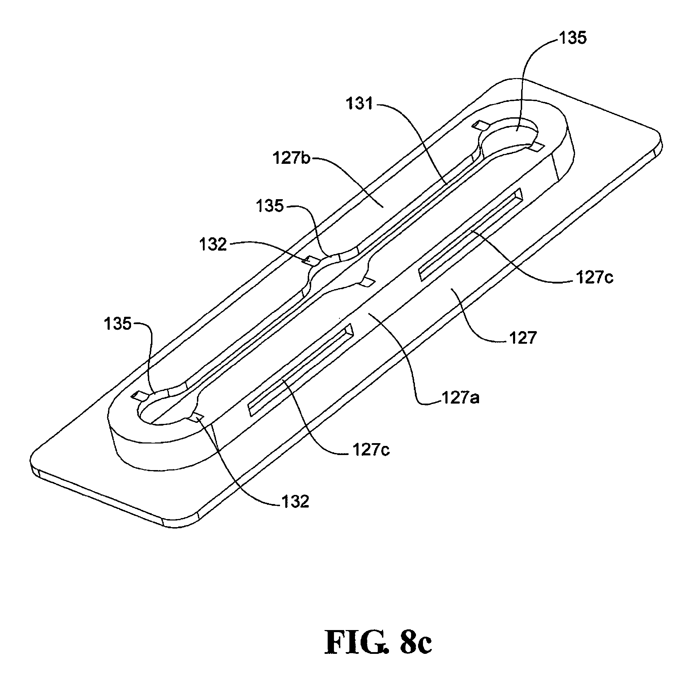

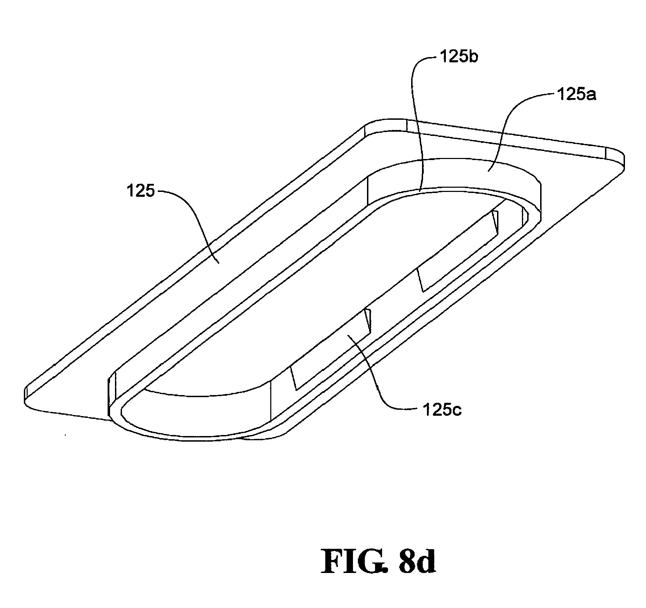

In this embodiment, as shown in Figures 8b and 8c, the part of the body having the rear flange 127 also defines the elongate slot 131. That is, the rear flange 127 is an integral part of the body with the slot 131. That part of the body also has a boss 127a that extends forward of the rear flange 127. The slot 131 is formed in a front face of the boss 127b.

The part of the body having the front flange 125 is formed separately, and has a boss 125a that defines a recess 125b that receives the boss 127a of the rear part. The two bosses 125a, 127a are engaged with one another and held in engagement by tapered locking members 125c on one of the bosses that engage in respective locking recesses 127c on the other of the bosses. The tapered locking members provide a one-way engagement of the bosses, so that they cannot be easily separated.

With this configuration, the strap support 141 engages the part of the body that is integral with the rear flange 127. That means any pulling force on the loop 143 of the strap support is directly transferred to the rear flange 127. That provides a stronger configuration than that of the first embodiment.

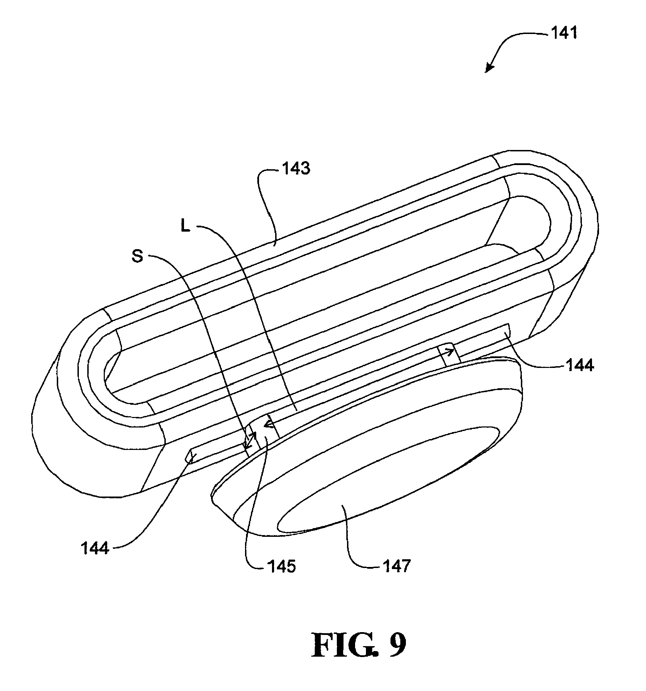

In this embodiment, the elongate slot 131 defines one or more enlarged regions 135, each of which defines an engagement position for the strap support. The engagement portion of the strap support is part of the portion 145 that extends through the elongate slot 131. Again, the engagement portion 145 has a shorter dimension S and a longer dimension L as shown in Figure 9, and the apparatus is configured such that the engaged configuration of the strap support 141 corresponds to the longer dimension L extending across the slot 131 while the sliding configuration of the strap support corresponds to the shorter dimension S extending across the slot 131. The longer dimension L of the engagement portion is configured to fit within the enlarged region(s) 135 of the slot, but is longer than the transverse width of the remainder of the slot 131 other than the enlarged region(s).

Additionally, the body has a plurality of detents in the form of recesses 132 provided in the front face of the body corresponding to the receiving portion 143 of the strap support. In the form shown, the recesses 132 are provided in pairs, with the recesses in each pair being positioned on respective sides of the slot 132 at the enlarged regions. As shown in Figure 9, the strap support has a further engagement portion comprising two projections 144 on the rear side of the loop 143 of the receiving portion, with the projections being positioned on respective sides of the portion 145 of the strap support that extends through the slot 131. Each projection 144 is configured to engage with a respective recess 132 of each pair of recesses. That further engagement portion 144 of the strap support is selectively engageable with the recesses 132 to define the engagement position(s).

The projections 144 are frictionally engageable with the recesses 132. This configuration minimises the likelihood of the strap support 141 being inadvertently rotated about the axis A, and thereby the strap support being inadvertently moved to the sliding configuration.

This embodiment could incorporate any of the features or modifications described above or below.

It will be appreciated that any of the different engagement portion configurations described in the two embodiments above could be used either alone or in any combination. For example, in relation to the first embodiment, the enlargements 35 in the rear channel of the first embodiment could be provided in combination with the enlargements 135 in the slot 131 and/or the recesses 132. In an alternative embodiment, the recesses 132 could be used alone, or the slot enlargements 135 could be used alone.

The above describes preferred embodiments of the present invention, and modifications can be made thereto without departing from the scope of the invention.

For example, in the form shown each strap is shown as a shoulder strap and each slot is oriented generally vertically to provide selective height adjustment of the point of support of the shoulder strap. Alternatively, the slot may be oriented generally horizontally to provide transverse adjustment of the point of support of the shoulder strap. In that configuration, a longer dimension of the receiving portion may be transverse to the longer dimension L of the engagement portion, such that when the engagement portion is engaged, the longer dimension of the receiving portion is generally horizontal. In another alternative, the slot may be oriented at an intermediate angle to provide both horizontal and vertical movement of the point of support of the shoulder strap. For example, the slot may be oriented such that the point of support for the shoulder strap moves outward as it moves upward. The engagement portion may be oriented at an intermediate angle relative to the receiving portion.

As an alternative, the harness may have only a single shoulder strap, possibly with or without a waist strap or crotch strap.

Alternatively, or in addition, the strap support may be positioned and configured to support the crotch strap 13 that extends between the legs of the baby, infant, or child. In that configuration, the slot would run in a generally forward-rearward direction of the seat portion, to provide selective depth adjustment of the crotch strap.

Alternatively, or in addition, the strap supports may be positioned and configured to support side straps 16a, 16b that extend around the sides of the baby, infant, or child. The strap supports may be provided on any of the possible orientations described in relation to the shoulder strap supports for example.

As another alternative, the harness may have only a waist strap, and the harness support may provide vertical and/or horizontal adjustment of the waist strap.

While the strap support apparatus is described with reference to a buggy, the seat may be any suitable type of seat that requires a harness for a baby, child, or infant. For example, the seat may be: a car seat for a baby, infant or child; a backpack for carrying a baby, infant, or child; wheelchair; shopping cart; booster seat; safety bassinet; highchair; or bouncer.

Rather than using a channel in the back of the body in the first embodiment, discrete projections or detents could be provided to define the engagement positions of the strap support.

Rather than being a loop, the receiving portion could be in any other suitable form, such as a hook or a partial loop for example. A loop is preferred, as it will help prevent the strap from inadvertently disengaging from the receiving portion.

Other possible modifications are listed in the "Summary of the Invention" section.

## Claims

1. A strap support apparatus for adjustable support of a strap, comprising:
a body having an elongate slot; and
a strap support, the strap support having a receiving portion for receipt of a strap, a portion that extends through the elongate slot of the body and that defines an axis, and a portion that is positioned on an opposite side of the slot from the receiving portion, part of the strap support defining an engagement portion for selectively engaging part of the body to inhibit movement of the strap support along the slot;
the strap support apparatus configured such that the strap support has a sliding configuration in which it can be moved along the slot and an engaged configuration in which sliding movement of the strap support along the slot is inhibited, wherein the strap support is adjustable between the sliding configuration and the engaged configuration by rotating the strap support about the axis relative to the body.

2. A strap support apparatus as claimed in claim 1, wherein the body is provided with at least one engagement position, and the strap support is adjustable into the engaged configuration at the engagement position.

3. A strap support apparatus as claimed in claim 2, wherein the body is provided with a plurality of discrete engagement positions, and the strap support is adjustable into the engaged configuration at any one of the discrete engagement positions.

4. A strap support apparatus as claimed in claim 2 or 3, configured such that the strap support must be generally aligned with an engagement position prior to rotating the strap support to adjust the strap support into the engaged configuration.

5. A strap support apparatus as claimed in any one of the preceding claims, wherein the engagement portion has a shorter dimension and a longer dimension, and the apparatus is configured such that the engaged configuration of the strap support corresponds to the longer dimension extending across the slot while the sliding configuration of the strap support corresponds to the shorter dimension extending across the slot.

6. A strap support apparatus as claimed in claim 5, wherein the body comprises a channel behind the slot, and the engagement portion of the strap support is defined by said portion that is positioned on an opposite side of the slot and is at least partly received in the channel, wherein the channel defines the engagement position(s).

7. A strap support apparatus as claimed in claim 6, wherein the channel defines one or more enlarged regions, each of which defines an engagement position for the strap support.

8. A strap support apparatus as claimed in claim 7, wherein the longer dimension of said engagement portion that is defined by said portion that is positioned on an opposite side of the slot is configured to fit within the enlarged region(s) of the channel, but is longer than the transverse width of the remainder of the channel other than the enlarged region(s).

9. A strap support apparatus as claimed in any one of claims 5 to 8, wherein the elongate slot defines one or more enlarged regions, each of which defines an engagement position for the strap support, and wherein the engagement portion of the strap support is defined by the portion that extends through the elongate slot, wherein the longer dimension of said engagement portion that is defined by the portion that extends through the elongate slot is configured to fit within the enlarged region(s) of the slot, but is longer than the transverse width of the remainder of the slot other than the enlarged region(s).

10. A strap support apparatus as claimed in any one of claims 5 to 9, wherein the body comprises a plurality of recesses provided in a front face of the body corresponding to the receiving portion of the strap support, the engagement portion is defined by the receiving portion of the strap support, and said engagement portion that is defined by the receiving portion of the strap support is selectively engageable with the recesses to define the engagement position(s).

11. A strap support apparatus as claimed in claim 10, wherein the recesses are provided in pairs, with the recesses in each pair being positioned on respective sides of the slot, and said engagement portion that is defined by the receiving portion of the strap support comprises two projections, each of which is configured to engage with a respective recess of each pair of recesses, with the projections being positioned on respective sides of the portion that extends through the slot.

12. A strap support apparatus as claimed in claim 10 or 11, wherein said engagement portion that is defined by the receiving portion of the strap support is frictionally engageable with the recesses.

13. A strap support apparatus as claimed in any one of claims 1 to 12, wherein the receiving portion of the strap support comprises a loop for receiving the strap.

14. A strap support apparatus as claimed in any one of claims 1 to 13, wherein the strap support is adjustable between the sliding configuration and the engaged configuration by rotating the strap support about the axis relative to the body, wherein the required amount of rotation is between about 30 degrees and about 90 degrees.

15. A strap support apparatus as claimed in claim 14, wherein the required amount of rotation is between about 45 degrees and about 90 degrees.

16. A strap support apparatus as claimed in claim 15, wherein the required amount of rotation is about 90 degrees.

17. A strap support apparatus as claimed in any one of claims 1 to 16, wherein the body is an integral part of a support surface.

18. A strap support apparatus as claimed in any one of claims 1 to 17, wherein the body is adapted to mount to a support surface, and the body comprises a forward flange and a rearward flange, with the forward flange adapted to be positioned in front of the support surface and the rearward flange adapted to be positioned behind the support surface.

19. A strap support apparatus as claimed in claim 18, wherein a part of the body having the forward flange is formed separately from a part of the body having the rearward flange.

20. A strap support apparatus as claimed in claim 19, wherein the part of the body having the rearward flange also defines the elongate slot.

21. A seat for supporting a baby, infant, or child, comprising:
a support surface for supporting the baby, infant, or child;
and a harness for supporting the baby, infant, or child when on the support surface, the harness having at least one strap supported by a strap support apparatus as claimed in any one of claims 1 to 20.

22. A seat according to claim 21, wherein the strap is a shoulder strap.

23. A seat according to claim 21, wherein the strap is a waist strap.

24. A seat according to claim 22 or 23, comprising a further shoulder strap supported by a strap support harness as claimed in any one of claims 1 to 20.

25. A seat according to any one of claims 21 to 24, wherein the harness comprises a crotch strap adapted to extend between the legs of the baby, infant, or child, wherein the crotch strap is supported by a strap support apparatus as claimed in any one of claims 1 to 20.

26. A seat according to any one of claims 21 to 25, wherein the harness comprises side straps adapted to extend around the sides of the baby, infant, or child, wherein each side strap is supported by a strap support apparatus as claimed in any one of claims 1 to 20.

27. A seat according to any one of claims 21 to 26, wherein the seat is one selected from the group consisting of: a buggy; a car seat for a baby, infant or child; a backpack for carrying a baby, infant, or child; a wheelchair; a shopping cart; a booster seat; a safety bassinet; a highchair; or a bouncer.
